# EUROPÄISCHE PATENTSCHRIFT

(11) **EP 1 761 712 B1**
(45) Veröffentlichungstag und Bekanntmachung des Hinweises auf die Patenterteilung: **24.12.2014**
(21) Anmeldenummer: 04802895.5
(22) Anmeldetag: 07.12.2004
(51) Int. Cl.: F16C 33/64, B23P 15/00, B23B 3/30, B23Q 39/04

(54) **VERFAHREN ZUR HERSTELLUNG VON KONZENTRISCH INEINANDER LAGERBAREN DREHTEILEN**
METHOD FOR PRODUCING TURNING WORKPIECES CONCENTRICALLY ARRANGEABLE IN EACH OTHER
PROCEDE POUR REALISER DES PIECES ROTATIVES QUI PEUVENT S'INSERER LES UNES DANS LES AUTRES DE FAÇON CONCENTRIQUE

(30) Priorität: 18.06.2004 DE 102004029600
(43) Veröffentlichungstag der Anmeldung: 14.03.2007
(73) Patentinhaber: Scherer, Frank, 63776 Mömbris-Dörnsteinbach (DE)
(72) Erfinder: Scherer, Frank, 63776 Mömbris-Dörnsteinbach (DE)
(74) Vertreter: Pöhner, Wilfried Anton
(86) Internationale Anmeldenummer: PCT/DE2004/002687
(87) Internationale Veröffentlichungsnummer: WO 2005/124174

(56) Entgegenhaltungen:
- DD-A5- 291 259
- DE-A1- 19 526 900
- DE-C1- 10 219 441
- FR-A- 914 315
- US-A- 1 854 897
- US-A- 3 378 903
- US-A1- 2004 123 464

## Beschreibung

Die Erfindung betrifft ein Verfahren zur Herstellung von zwei oder mehreren separaten Drehteilen.

Die aus dem Stand der Technik bekannten Verfahren zur Herstellung der konzentrisch ineinander gelagerten Ringe eines Kugellagers erfordern bei einem Kugellager, das aus zwei Ringen besteht, sowohl für den Außenring als auch für den Innenring zwei Bearbeitungsschritte der jeweiligen Außen- und Innenflächen. Nachteiligerweise ist damit ein viermaliges Einspannen der bereits zu Beginn der Bearbeitung getrennt vorliegenden Werkstücke erforderlich.

Aus dem Dokument DE 102 19 441 C ist ein Verfahren zur Herstellung von mehreren profilierten schleiffertigen Ringen, insbesondere von Wälzlagerringen und Getrieberingen, bekannt, wobei ein Ring oder mehrere Ringe gemeinsam durch eine Kombination spanabhebender und umformender Verfahrensschritte eines Drehautomaten mit integrierter Walzvorrichtung ausgehend von einem eingespannten Rohr in einer Aufspannung bearbeitet wird.
Zunächst werden Innenfläche, Außenfläche und eine Stirnfläche eines Ringes oder mehrerer Ringe bearbeitet.
Zum Schluss wird ein Innenspanndorn am freien Ende des bearbeiteten Rohrs angelegt und erfolgt das Abstechen des komplett schleiffertig profilierten Ringes vom Rohr sowie das Plandrehen der dadurch entstehenden Stirnseite.
Ein ähnliches Verfahren zur Herstellung von Innenringen- bzw. Auβenringen für Kugellager ist aus dem Dokument DE 195 26 900 A bekannt.

Ein aus dem Stand der Technik bekannte Beschleunigung des Herstellungsprozesse besteht darin, dass der Innen- und Außenring als einstückiges Werkstück von innen und zumindest teilweise auch von außen bearbeitet wird, wobei die Ringe in einem abschließenden Arbeitsschritt durch Stechen getrennt werden. Nachteiligerweise führt das Abstechen zu einem Grat an zumindest einem der Ringe, der unter zusätzlichem Arbeitsaufwand und erneutem Einspannen entfernt werden muß.

Dokument US 3 378 903 A offenbart ein derartiges Verfahren zur gleichzeitigen Herstellung eines Außenrings und eines Innenrings eines Kugellagers, aus einem gemeinsamen Rohling. Die beiden Lagerringe werden zunächst gemeinsam bearbeitet und abschlieβend durch Abdrehen des Material zwischen den Lagerringen getrennt.

Die Aufgabe der Erfindung besteht vor diesem Hintergrund in der Entwicklung eines Verfahrens zur möglichst rationellen Herstellung von konzentrisch ineinander liegenden Drehteilen, insbesondere von Kugellagerringen, ausgehend von einem zusammenhängenden Werkstück. Dabei soll das Verfahren gewährleisten, dass die Spannfutter der Drehmaschine möglichst selten am Werkstück fixiert b.z.w. umgespannt werden müssen. Insbesondere soll das Werkstück oder Teile davon nach der einmal begonnen Verarbeitung bis zur Fertigstellung der Drehteile nicht mehr aus der Drehmaschine entnommen werden müssen.

Zur Lösung der Aufgabe lehrt die Erfindung ein Verfahren mit den in Anspruch 1 angegebenen Merkmalen.

Der Kerngedanke der Erfindung besteht in der Ausnützung der unterschiedlichen Außendurchmesser von konzentrisch ineinander liegenden Teilen, wie beispielsweise dem Außen- und Innenring eines Kugellagers. Bei Einsatz eines hohlzylindrischen Werkstücks muss dessen Wandung mindestens so stark sein wie die Wandung des herzustellenden Kugellagers. Denkbar ist natürlich auch der Einsatz eines zylindrischen Vollmaterials, dessen Kern im Rahmen der Bearbeitung aufgebohrt wird. In axialer Ausdehnung muss das Werkstück mindestens die doppelte Höhe des Kugellagers aufweisen.

Mit einem Werkstück, das den genannten Abmessungen entspricht, ist es bei Anwendung des erfindungsgemäßen Verfahrens möglich, dass beispielsweise nach der zumindest abschnittsweise durchgeführten Bearbeitung der außenseitigen Mantelfläche eines der Auβenringe eine Fixierung des Werkstücks durch ein Außenspannfutter einer Drehmaschine möglich ist. Nach dieser Fixierung kann sowohl die Innenseite des Außen- und des Innenrings als auch die Bearbeitung der Außenseite des verbleibenden Rings gleichzeitig erfolgen, ohne, dass ein weiteres Anspannen des Werkstückes erforderlich ist. In diesem Dokument wird ein Rohling nach der ersten Bearbeitung als Werkstück bezeichnet. Die aus dem Werkstück herauszuarbeitenden Einzelteile werden als Drehteile bezeichnet.

Spätestens nach Abschluss der Bearbeitung der Innenseite des Innenrings wird ein Innenspannfutter angelegt, das die Fixierung des Innenrings, nach der Entfernung des Restmaterials, das den Außen- und Innenring noch verbindet, durch spanabhebende Werkzeuge, ermöglicht. Bereits während das zusätzlich Spannfutter am noch freidrehenden Ende angelegt wird, werden die Stirnseiten der Drehteile ohne ein weiteres Umspannen bearbeitet bis sie als getrennte Teile im fertigen Zustand vorliegen. Ein zusätzliches Entgraten der Teile entfällt vorteilhafterweise. Im Ergebnis wurde ein bislang mindestens dreistufiges auf ein zweistufiges Arbeitsverfahren reduziert, ohne dass eine zusätzliche Entgratung der Stirnseiten notwendig wäre.

Das für jede Art von konzentrisch ineinander liegenden Drehteilen anwendbare Verfahren eignet sich besonders für die Herstellung von Kugellagerringen. Nachdem einleitend zuerst eine Außen- oder Innenfläche an einem Endabschnitt des Werkstücks bearbeitet worden ist, wird das Werkstück durch die an dieser Fläche anliegenden Spannbacken des Außenspannfutters oder des Innenspanndorns, die zu einer Drehmaschine gehören, fixiert. Im Anschluss daran werden die verbleibenden Flächen gleichzeitig, d.h. parallel, bearbeitet. Die verbleibenden Flächen umfassen im Falle eines Kugellagers mit zwei Ringen die Außenfläche des Außenrings oder die Innenfläche des Außenrings oder die Außenfläche des Innenrings oder die Innenfläche des Innenrings. So hat es sich beispielsweise bewährt, dass zuerst die Mantelfläche des Außenrings zur Schaffung einer Anlagefläche für das Außenspannfutter zumindest abschnittsweise bearbeitet wird. Nachdem das Werkstück über diese zuerst bearbeitete Fläche fixiert ist, können die verbleibenden Flächen ohne ein weiteres Umspannen des Werkstückes bearbeitet werden. Dabei hat es sich bewährt, dass zunächst die Innenfläche des Außenrings und die Innenfläche des Innenrings bearbeitet werden. Nach Abschluss der Bearbeitung der Innenfläche des Innenrings wird an der Innenseite des Innenrings ein Innenspanndorn angelegt, der simultan zum Auβenspannfutter dreh- und steuerbar ist. Nachdem das Werkstück von zwei Seiten fixiert ist, wird das Material, das den Innen- und den Auβenring verbindet, abgedreht. Die beiden Drehteile werden dadurch voneinander getrennt und liegen nach der Freigabe vom jeweiligen Spannfutter in ihrer fertigen Form vor.

In einer Weiterbildung des Verfahrens ist vorgesehen, dass die Stirnseite des Innenrings, die dem Übergangsbereich zwischen Innen- und Außenring benachbart ist, durch einen zur Drehmaschine gehörenden und ebenfalls drehbar gelagerten Anschlag abgestützt wird. Durch die abstützende Wirkung des anliegenden Anschlags wird sichergestellt, dass sich der Innenring nicht mit zunehmender Entfernung des Materials, das den Außen- und Innenring verbindet, verschiebt.

Natürlich ist denkbar, dass die nach dem anfänglichen Umspannen des Werkstücks folgenden Bearbeitungsschritte alle oder zumindest zum Teil simultan durchführbar sind. Die damit verbundene Zeitersparnis senkt die Herstellungskosten insbesondere bei Massengütern wie Kugellager deutlich.

Zur weiteren Rationalisierung des Verfahrens ist vorgesehen, dass das Werkstück von einem langgestreckten stangenförmigen Materialabschnitt, der bereits von einem der Spannfutter der Drehmaschine fixiert wird, abgetrennt wird. Sinnvollerweise erfolgt vor der Abtrennung die abschließende Bearbeitung einer der Flächen eines der aus dem zusammenhängenden Werkstück zu gewinnenden Drehteile. Nach dem Umspannen wird das Werkstück zunächst allein über dies Fläche fixiert. Im Profil kann das Werkstück sowohl einen Hohlzylinder aufweisen, als auch aus Vollmaterial bestehen. Im zweiten Fall ist nach dem einleitenden Bearbeitungsschritt einer der Außenflächen des Werkstücks erforderlich, dass dessen Kern aufgebohrt wird, so dass dieser innenseitig für die Werkzeuge einer spanabhebenden Bearbeitung zugänglich ist.

Es versteht sich von selbst, dass das nach dem erfindungsgemäßen Verfahren bearbeitbare Werkstück mehr als zwei Drehteile beinhaltet, die nach Fertigstellung konzentrisch ineinander zu liegen kommen. Denkbar ist zum Beispiel ein Kugellager, das aus drei oder mehr Ringen aufgebaut ist.

Eine Drehmaschine zur Umsetzung des erfindungsgemäßen Verfahrens ist mit zwei einander gegenüberliegenden drehbaren Spindeln ausgestattet ist. Dabei sollte eine der Spindeln ein Außenspannfutter, und die andere ein Innenspannfutter bzw. einen Innenspanndorn aufweisen. Prinzipiell ist denkbar, dass die Achsrichtung der beiden Spindeln axial oder vertikal ausgerichtet ist. Zur Stabilisierung des Innenrings weist die Maschine außerdem einen Anschlag auf, der mit dem Außenspannfutter drehbar ist und an der Stirnseite des Innenrings nach Abschluss ihrer Bearbeitung anliegt.

Bei vertikaler Ausrichtung der zur Drehmaschine gehörenden Spindeln ist denkbar, dass diese aus zwei Arbeitsstationen besteht, die jeweils aus zwei sich gegenüberliegenden in vertikaler Richtung ausgerichteten Spindeln (Vertikalspindeln) bestehen. Zur Rationalisierung der beiden Arbeitsschritte ist denkbar, dass zwischen beiden zu einer Drehmaschine gehörenden Arbeitsstationen eine Drehscheibe mit Aussparungen zur Aufnahme der zylindrischen Werkstücke angeordnet ist. Die Aussparungen nehmen die auf einem Transportband angedienten Werkstücke auf und bewegen diese in Richtung der ersten Arbeitsstation. Nach Abschluss des ersten Arbeitsschritts transportiert die Drehscheibe die Werkstücke zur zweiten Arbeitsstation wo die abschließende Bearbeitung der verbleibenden Flächen gemäß dem erfindungsgemäßen Verfahren durchgeführt wird. Die Ausgabe der fertigen Drehteile aus der zweiten Arbeitsstation kann ebenfalls über die Drehscheibe erfolgen. Denkbar ist zum Beispiel auch die Abführung der fertigen Drehteile über eine Rutsche.

Es versteht sich von selbst, dass die Maschine zur Steuerung der ganz oder weitgehend simultan erfolgenden Arbeitsschritte mit sämtlichen dem Fachmann bekannten Methoden, wie beispielsweise CNC-Steuerung oder Computersteuerung, verbindbar ist.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: Werkstück für zwei konzentrisch ineinander liegende Drehteile.
- Figur 2: Werkstück nach der Bearbeitung der Außenfläche des Außenrings sowie der Innenfläche des Außenrings, und der Innenfläche des Innenrings eines Kugellagers.

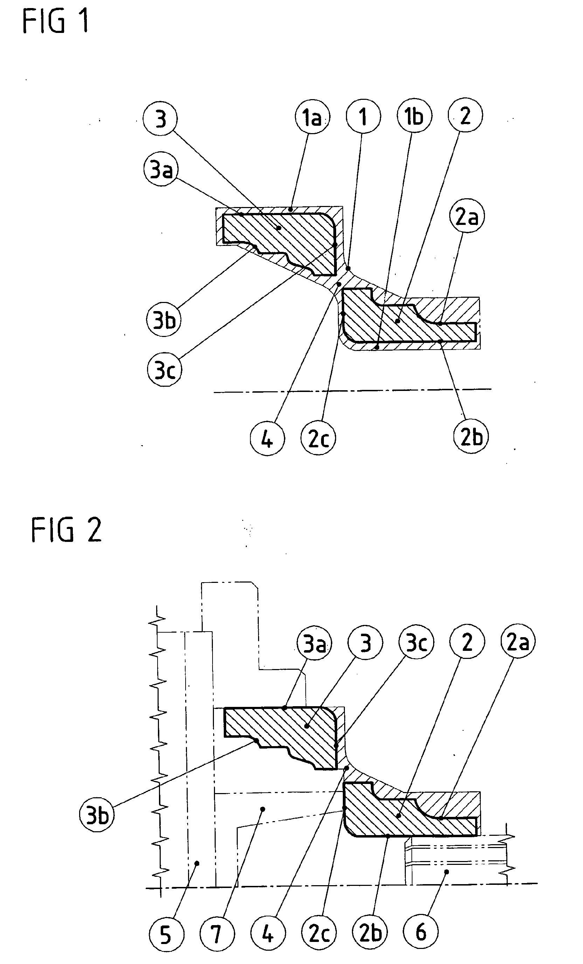

Figur 1 zeigt schraffiert das zumindest abschnittsweise hohlzylindrischen Werkstück 1 im Querschnitt. Die beiden zu fertigenden Ringe 2, 3, die den Außenring 3 und den Innenring 2 eines Kugellagers bilden.
In Figur 2 ist die Außenseite 3a des Außenrings 3 durch die Spannbacken eines Außenspannfutters 5 fixiert, nachdem die Innenseite 3b des Außenrings 3 bereits bearbeitet wurde. Das gleiche gilt für die Innenseite 2b des Innenrings 2 sowie die in Richtung Außenring 3 zeigende Stirnseite 2c des Innenrings 2. Zur besseren Stabilisierung des Innenrings während der abschließenden Entfernung des zwischen Außen- 3 und Innenring 2 befindlichen Materials 4 liegt an der Stirnseite 2c des Innenrings 2 ein Anschlag 7 an. Der Anschlag 7 ist beweglich im Außenspannfutter 5 der Drehmaschine gelagert und dreht sich während der Bearbeitung mit diesem mit.

### Bezugszeichenliste

- 1: Werkstück

- 2: Drehteil, z. B. Innenring eines Kugellagers
- 2a: Außenseite Innenring
- 2b: Innenseite Innenring
- 2c: Stirnseite Innenring

- 3: Drehteil, z. B. Außenring eines Kugellagers
- 3a: Außenseite Außenring
- 3b: Innenseite Außenring
- 3c: Stirnseite Außenring

- 4: Bereich zwischen Außenring und Innenring

- 5: Außenspannfutter

- 6: Innenspanndorn

- 7: Anschlag zur Anlage der Stirnseite des Innenrings

## Patentansprüche

1. Verfahren zur Herstellung von zwei oder mehreren separaten, konzentrisch ineinander liegenden Drehteilen (2, 3) aus einem zusammenhängenden und zumindest abschnittsweise zylindrischen oder hohlzylindrischen Werkstück (1), insbesondere zur Herstellung des Außenrings (3) und des Innenringes (2) eines Kugellagers, unter Einsatz einer mit Außenspannfutter (5) und Innenspanndorn (6) sowie mit spanabhebenden Werkzeugen ausgerüsteten Drehmaschine, wobei
- zuerst die Bearbeitung mindestens einer Außen-(1a) oder Innenfläche (1b) an einem Endabschnitt des Werkstücks(1) bis zum Vorliegen des Zustandes erfolgt, welchen die Fläche (3a) im fertigen Drehteil (3) aufweist, und
- nach einmaligem Umspannen des Werkstücks (1) in ein Auβenspannfutter (5) oder einen Innenspanndorn (6), welche das Werkstück (1) an der im ersten Schritt bearbeitete Fläche (3a) fixiert, die jeweils verbleibenden Flächen (3b, 2a, 2b) bearbeitet werden,
wobei
- mit dem Anlegen eines Innenspanndorns (6) oder eines Außenspannfutters (5) am noch frei drehenden Ende des Werkstücks (1), das Material (4) zwischen den Drehteilen (2, 3), beispielsweise dem Innen- (2) und Außenring (3) eines Kugellagers, abgedreht wird und
- bereits während der zusätzliche Innenspanndorn (6) oder das zusätzliche Außenspannfutter (5) angelegt wird, die Stirnseiten der Drehteile (2,3) ohne ein weiteres Umspannen bearbeitet werden.

2. Verfahren nach Anspruch 1, **dadurch gekennzeichnet, dass** die nach dem Umspannen des Werkstücks (1) zur parallelen Bearbeitung verbleibenden Flächen, bei der Fertigung von Kugellagerringen
- die Außenfläche (3a) des Außenrings (3),
- die Innenfläche (3b) des Außenrings (3)
- die Außenfläche (2a) des Innenrings (2) oder
- die Innenfläche (2b) des Innenrings (2) umfassen.

3. Verfahren nach einem der vorhergehenden Ansprüche,
**dadurch gekennzeichnet, dass** bei Herstellung eines Kugellagers vorzugsweise
- zuerst die Mantelfläche (3a) des Außenrings (3) zur Schaffung einer Fläche für das Außenspannfutter (5) zumindest abschnittsweise bearbeitet wird, und nachfolgend
- nach einmaligem Umspannen des Werkstücks (1) in ein Außenspannfutter (5), welches das Werkstück (1) über die im ersten Schritt bearbeitete Fläche fixiert,
- die Innenfläche (3b) des Außenrings (3) und die Innenfläche (2b) des Innenrings (2) bearbeitet werden, und abschließend
- nach Anlegen eines Innenspanndorns (6) an der Innenseite (2b) des Innenrings (2) die Außenfläche (2a) des Innenrings (2) und zumindest die Stirnfläche (3c) des Außenrings (3) bearbeitet wird, und
- das Material (4) zwischen dem Innen- (2) und Außenring (3) abgedreht wird.

4. Verfahren nach einem der vorhergehenden Ansprüche
**dadurch gekennzeichnet, dass** bei der Fertigung von Kugellagerringen bzw. bei Herstellung eines Kugellagers an der Stirnseite des Innenrings (2), die in Richtung des Übergangsbereichs (4) zwischen dem Innenring (2) und dem Außenring (3) zeigt, während des letzten Bearbeitungsschrittes, der die Trennung des Außenrings (3) vom Innenring (4) beinhaltet, ein zur Drehmaschine gehörender und ebenfalls drehbar gelagerter Anschlag (7) angelegt wird.

5. Verfahren nach einem der vorhergehenden Ansprüche,
**dadurch gekennzeichnet, dass** die spanabhebende Bearbeitung der Außen- (2a, 3a) und Innenflächen (2b, 3b) des Werkstücks (1) nach dem Umspannen sowie das Anlegen eines zusätzlichen Innenspanndorns (6) oder eines zusätzlichen Außenspannfutters (5) oder eines Anschlags (7) zur stirnseitigen Stabilisierung eines der Drehteile (2,3) in koordinierter zeitlicher Abfolge in einem zusammenhängenden Arbeitsablauf mit zumindest teilweise simultan ausgeführten Arbeitsschritten durchführbar ist.

6. Verfahren nach einem der vorhergehenden Ansprüche,
**dadurch gekennzeichnet, dass** ein hohlzylindrisches Werkstück (1) nach dem einleitenden ersten Bearbeitungsschritt einer Außen- (3a) oder Innenfläche (2b), jeweils von einem langgestreckten stangenförmigen Materialabschnitt abgetrennt wird, bevor die weiteren Arbeitsschritte folgen.

7. Verfahren nach einem der vorhergehenden Ansprüche,
**dadurch gekennzeichnet, dass** ein vollzylindrisches Werkstück nach dem einleitenden Bearbeitungsschritt einer Außenfläche (3a), jeweils von einem langgestreckten stangenförmigen Materialabschnitt abgetrennt wird, bevor nachfolgend der Kern des Werkstücks aufgebohrt wird und die weiteren Arbeitsschritte folgen.

8. Verfahren nach einem der vorhergehenden Ansprüche,
**dadurch gekennzeichnet, dass** das zu bearbeitende Werkstück (1) mehr als zwei separate Drehteile beinhaltet, die nach Fertigstellung konzentrisch ineinander zu liegen kommen.

9. Verfahren nach einem der vorhergehenden Ansprüche,
**dadurch gekennzeichnet, dass** die Koordination der ganz oder teilweise simultan erfolgenden Arbeitsabläufe CNC-gesteuert durchgeführt wird.

## Claims

1. Method for producing two or more separate rotational parts (2,3), which lie concentrically one inside the other, from a workpiece (1), which is contiguous and, at least in sections, is cylindrical or hollow cylindrical, in particular for producing the outer ring (3) and the inner ring (2) of a ball bearing, with the use of a lathe, which is equipped with an outer chuck (5) and an inner clamping mandrel (6), as well as with cutting tools, wherein
- the machining of an outer (1 a) or inner (1 b) surface first takes place on an end section of the workpiece (1) until the state is produced that the surface (3a) has in the finished part (3), and
- after reclamping of the workpiece (1) once into an outer chuck (5) or an inner clamping mandrel (6), which fixes the workpiece (1) on the surface (3a) that was produced in the first step, the remaining surfaces (3b, 2a, 2b) are machined,
wherein
- with the application of an inner clamping mandrel (6) or an outer chuck (5) against the still freely rotating end of the workpiece (1), the material (4) between the rotational parts (2, 3), for example the inner (2) and outer ring (3) of a ball bearing, is turned off, and
- already while the additional inner clamping mandrel (6) or the additional outer chuck (5) is applied, the end faces of the rotational parts (2, 3) are machined without further reclamping.

2. Method according to Claim 1, **characterized in that** the surfaces remaining for parallel machining surfaces after reclamping of the workpiece (1), in the production of ball-bearing rings, comprise
- the outer surface (3a) of the outer ring (3),
- the inner surface (3b) of the outer ring (3)
- the outer surface (2a) of the inner ring (2), or
- the inner surface (2b) of the inner ring (2).

3. Method according to one of the preceding claims, **characterized in that**, for the production of a ball bearing, preferably
- first the lateral surface (3a) of the outer ring (3) is machined, at least in sections, to create a surface for the outer chuck (5), and subsequently
- after reclamping of the workpiece (1) once into an outer chuck (5), which fixes the workpiece (1) via the surface that was machined in the first step,
- the inner surface (3b) of the outer ring (3) and the inner surface (2b) of the inner ring (2) are machined, and subsequently
- after an inner clamping mandrel (6) is applied against the inner side (2b) of the inner ring (2), the outer surface (2a) of the inner ring (2) and at least the end face (3c) of the outer ring (3) is machined, and
- the material (4) between the inner (2) and outer (3) ring is turned off.

4. Method according to one of the preceding claims, **characterised in that**, upon production of ball bearing rings or on the production of a ball bearing on the end face of the inner ring (2), which faces in the direction of the transition region (4) between the inner ring (2) and the outer ring (3), during the last machining step, which includes the separation of the outer ring (3) from the inner ring (4), a stop (7), which belongs to the lathe and is also mounted so as to be rotatable is applied.

5. Method according to one of the preceding claims, **characterised in that** the cutting machining of the outer (2a, 3a) and inner (2b, 3b) surfaces of the workpiece (1), can be performed after reclamping, and the application of an additional inner clamping mandrel (6) or an outer chuck (5) or a stop (7), for end-face stabilization of one of the rotational parts (2, 3), in coordinated sequence in a contiguous workflow with a least partly simultaneously executed work steps.

6. Method according to one of the preceding claims, **characterised in that**, after the initial first step of machining an outer (3a) or inner surface (2b), a hollow-cylindrical workpiece (1) is separated off in each case from an elongated rod-shaped material section before the further work steps follow.

7. Method according to one of the preceding claims, **characterised in that**, after the initial machining step of an outer surface, a solid-cylindrical workpiece(3a), is in each case cut off from an elongated rod-shaped material section before â hole is subsequently bored in the core of the material, and the further worksteps follow.

8. Method according to one of the preceding claims, **characterized in that** the workpiece (1) to be machined includes more than two separate rotational parts, which, after completion, come to lie concentrically one inside the other.

9. Method according to one of the preceding claims, **characterised in that** the coordination of the entirely or partly simultaneously executed workflows is CNC controlled.

## Revendications

1. Procédé destiné à fabriquer deux ou plusieurs pièces tournées (2, 3) séparées et placées l'une dans l'autre de façon concentrique à partir d'une pièce à usiner (1) d'un seul tenant et, au moins par sections, de forme cylindrique ou cylindrique creuse, notamment destinée à fabriquer la bague extérieure (3) et la bague intérieure (2) d'un roulement à billes, en utilisant un tour équipé d'un mandrin de serrage externe (5) et d'une broche de serrage interne (6), ainsi que d'outils d'usinage,
sachant que
- l'usinage commence par au moins une surface extérieure (1a) ou intérieure (1 b) sur une section finale de la pièce à usiner (1) jusqu'à ce qu'on ait atteint un état qui présente la surface (3a) dans la pièce tournée (3) finie, et
- se poursuit, après que la pièce à usiner (1) a été serrée une fois dans un mandrin de serrage externe (5) ou une broche de serrage interne (6) qui fixe la pièce à usiner (1) sur la surface (3a) usinée dans une première étape, les surfaces restantes (3b, 2a, 2b) à chaque fois étant usinées ensuite,
sachant que
- en plaçant une broche de serrage interne (6) ou un mandrin de serrage externe (5) sur l'extrémité tournant encore librement de la pièce à usiner (1), le matériau (4) est tourné entre les pièces tournées (2, 3), par exemple la bague intérieure (2) et la bague extérieure (3) d'un roulement à billes
- les faces frontales des pièces à usiner (2,3) étant usinées sans serrage supplémentaires dès le moment où la broche de serrage (6) interne supplémentaire ou le mandrin de serrage externe (5) sont placés.

2. Procédé selon la revendication 1, **caractérisé par le fait que** les surfaces restant à usiner parallèlement après le serrage de la pièce à usiner (1) comprennent, lors de la fabrication de bagues de roulements à billes
- la surface extérieure (3a) de la bague extérieure (3),
- la surface intérieure (3b) de la bague extérieure (3)
- la surface extérieure (2a) de la bague intérieure (2) ou
- la surface intérieure (2b) de la bague intérieure (2).

3. Procédé selon une des revendications précédentes, **caractérisé par le fait que** lors de la fabrication d'un roulement à billes, de préférence
- la surface du manteau (3a) de la bague extérieure (3) est usinée en premier, au moins par sections, afin de créer une surface pour le mandrin de serrage externe (5), et qu'ensuite
- la pièce à usiner (1) ayant été serrée une fois dans un mandrin de serrage externe (5), qui fixe la pièce à usiner (1) par-dessus la surface usinée dans une première étape de travail,
- la surface intérieure (3b) de la bague extérieure (3) et la surface intérieure (2b) de la bague intérieure (2) sont usinées, et que pour finir
- après que la broche de serrage intérieure (6) a été posée sur la face intérieure (2b) de la bague intérieure (2), la surface extérieure (2a) de la bague intérieure (2) et au moins la surface frontale (3c) de la bague extérieure (3) soit usinées,
- le matériau (4) étant tourné entre la bague intérieure (2) et la bague extérieure (3).

4. Procédé selon une des revendications précédentes, **caractérisé par le fait que** lors de la fabrication de bagues de roulements à billes et de roulements à billes, une butée (7) appartenant au tour et également suspendue de façon rotative soit placée sur la face frontale de la bague intérieure (2), qui est tournée en direction de la zone de transition (4) entre la bague intérieure (2) et la bague extérieure (3) pendant la dernière étape d'usinage, qui comprend la séparation de la bague extérieure (3) de la bague intérieure (4).

5. Procédé selon une des revendications précédentes, **caractérisé par le fait qu'**il est possible d'usiner les surfaces extérieures (2a, 3a) et intérieures (2b, 3b) de la pièce à usiner (1), après le serrage et la pose d'une broche de serrage interne (6) supplémentaire ou d'un mandrin de serrage externe (5) supplémentaire ou d'une butée (7) destinée à stabiliser sur la face frontale une des pièces tournées (2, 3) d'une façon coordonnée dans le temps, dans le cadre d'un déroulement de travail d'un seul tenant avec des étapes de travail exécutées au moins en partie simultanément.

6. Procédé selon une des revendications précédentes, **caractérisé par le fait qu'**une pièce à usiner (1) ayant la forme d'un cylindre creux est, après une première étape préliminaire consistant à usiner une surface extérieure (3a) ou intérieure (2b), est séparée à chaque fois d'une section de matériau allongée en forme de tige, avant que les autres étapes de travail ne suivent.

7. Procédé selon la revendication 5, **caractérisé par le fait qu'**une pièce à usiner (1) ayant la forme d'un cylindre plein est, après une première étape préliminaire consistant à usiner une surface extérieure (3a), est séparé à chaque fois d'une section de matériau allongée en forme de tige avant que le noyau de la pièce à usiner soit ensuite percé et que les autres étapes de travail ne suivent.

8. Procédé selon une des revendications précédentes, **caractérisé par le fait que** la pièce à usiner (1) contient plus que deux pièces tournées séparées qui sont placées de façon concentrique l'une dans l'autre après avoir été réalisées.

9. Procédé selon une des revendications précédentes, **caractérisé par le fait que** la coordination des déroulements de travail est réalisée, partiellement ou complètement, par une commande numérique.
